# EUROPEAN PATENT APPLICATION

(11) **EP 4 447 019 A1**
(43) Date of publication of application: **16.10.2024**
(21) Application number: 22830940.7
(22) Date of filing: 24.11.2022
(51) Int. Cl.: G08G 1/16, B60W 30/18, B60W 50/14, B62D 15/02

(54) **ASSISTANCE SYSTEM AND CONTROL METHOD THEREOF**

(30) Priority: 07.12.2021 JP 2021198445
(71) Applicant: Robert Bosch GmbH, 70442 Stuttgart (DE)
(72) Inventor: PFAU, Lars, Yokohama-shi, Kanagawa 224-8501 (JP)
(74) Representative: Isarpatent
(86) International application number: PCT/IB2022/061387
(87) International publication number: WO 2023/105337

(57) **Abstract**

The invention is to obtain an assistance system that is capable of responding to driving particularity of a straddle-type vehicle. In addition, the invention is to obtain a control method of such an assistance system.

Surrounding environment information on a straddle-type vehicle (100) is acquired on the basis of the output of at least one surrounding environment detection device (11), presence or absence of pass-through driving of the straddle-type vehicle (100) between lines of vehicles is determined on the basis of the surrounding environment information, when it is determined that there is the pass-through driving between the lines of vehicles, a trigger signal is transmitted to an other-control device (120) from a control device (20) of the straddle-type vehicle (100) through wireless communication, and when the trigger signal is received, the other-control device (120) executes an other-vehicle driver assistance operation of assisting a driver of an other-vehicle (200) positioned around the straddle-type vehicle (100).

## Description

### Technical Field

The present invention relates to an assistance system including a control device of a straddle-type vehicle to which at least one surrounding environment detection device is mounted, and a control method of an assistance system including a control device of a straddle-type vehicle to which at least one surrounding environment detection device is mounted.

### Background Art

As a straddle-type vehicle of the related art, there is a straddle-type vehicle to which an assistance system capable of executing a driver assistance operation of assisting a driver of the straddle-type vehicle is mounted (for example, PTL 1).

### Citation List

### Patent Literature

PTL 1: JP2009-116882A

### Summary of Invention

### Technical Problem

The straddle-type vehicle is significantly smaller than other vehicles (for example, a passenger car, a cargo truck, and the like). Accordingly, the straddle-type vehicle is capable of performing particular driving that is not assumed in the other vehicles. On the other hand, in the assistance system that is mounted to the straddle-type vehicle of the related art, it may be difficult to suitably respond to driving particularity of the straddle-type vehicle.

The invention has been made on the background of the problems described above, and is to obtain an assistance system that is capable of responding to driving particularity of a straddle-type vehicle. In addition, the invention is to obtain a control method of such an assistance system.

### Solution to Problem

An assistance system according to the invention is an assistance system including a control device of a straddle-type vehicle to which at least one surrounding environment detection device is mounted, in which the control device includes a determination section determining presence or absence of pass-through driving of the straddle-type vehicle between lines of vehicles, on the basis of output of the surrounding environment detection device, and an execution section executing a communication operation of transmitting a trigger signal to an other-control device through wireless communication when the determination section determines that there is the pass-through driving between the lines of vehicles, and when the trigger signal is received, the other-control device executes an other-vehicle driver assistance operation of assisting a driver of an other-vehicle positioned around the straddle-type vehicle.

A control method according to the invention is a control method of an assistance system including a control device of a straddle-type vehicle to which at least one surrounding environment detection device is mounted, in which a determination section of the control device determines presence or absence of pass-through driving of the straddle-type vehicle between lines of vehicles, on the basis of output of the surrounding environment detection device, when the determination section determines that there is the pass-through driving between the lines of vehicles, an execution section of the control device executes a communication operation of transmitting a trigger signal to an other-control device through wireless communication, and when the trigger signal is received, the other-control device executes an other-vehicle driver assistance operation of assisting a driver of an other-vehicle positioned around the straddle-type vehicle.

### Advantageous Effects of Invention

In the assistance system and the control method according to the invention, surrounding environment information on the straddle-type vehicle is acquired on the basis of the output of at least one surrounding environment detection device, the presence or absence of the pass-through driving of the straddle-type vehicle between the lines of vehicles is determined on the basis of the surrounding environment information, when it is determined that there is the pass-through driving between the lines of vehicles, the trigger signal is transmitted to the other-control device from the control device of the straddle-type vehicle through the wireless communication, and when the trigger signal is received, the other-control device executes the other-vehicle driver assistance operation of assisting the driver of the other-vehicle positioned around the straddle-type vehicle. Accordingly, it is possible to suitably respond to driving particularity of the straddle-type vehicle.

### Brief Description of Drawings

Fig. 1 is a diagram illustrating a configuration of an assistance system according to an embodiment of the invention.
Fig. 2 is a diagram illustrating the configuration of the assistance system according to the embodiment of the invention.
Fig. 3 is a diagram for illustrating an example of a function of the assistance system according to the embodiment of the invention.
Fig. 4 is a diagram for illustrating an example of an operation of the assistance system according to the embodiment of the invention.

### Description of Embodiments

Hereinafter, an assistance system and a control method according to the invention will be described by using the drawings.

Note that, the following configurations, operations, and the like are an example, and the assistance system and the control method according to the invention are not limited to the following configurations, operations, and the like.

For example, hereinafter, a case will be described in which a straddle-type vehicle is a motor bicycle, but in the assistance system and the control method according to the invention, the straddle-type vehicle may be a vehicle other than the motor bicycle. The straddle-type vehicle, for example, is a motorcycle (a motor bicycle or a motor tricycle), a bicycle, or the like, and indicates a type of vehicle that a driver straddles. The motorcycle includes a vehicle using an engine as a driving source, a vehicle using an electric motor as a driving source, and the like, and for example, includes a motorbike, a scooter, an electric scooter, and the like. In addition, the bicycle indicates a vehicle that can be driven on the road by a pedal force of the driver. The bicycle includes an ordinary bicycle, a power-assisted bicycle, an electric bicycle, and the like.

In addition, hereinafter, the same or similar description will be suitably simplified or omitted. In addition, in each of the drawings, the same reference numerals will be applied to the same or similar parts. In addition, the illustration of a detailed structure will be suitably simplified or omitted.

### Embodiment.

Hereinafter, an assistance system according to an embodiment will be described.

### <Configuration of Assistance System>

The configuration of the assistance system according to the embodiment will be described.

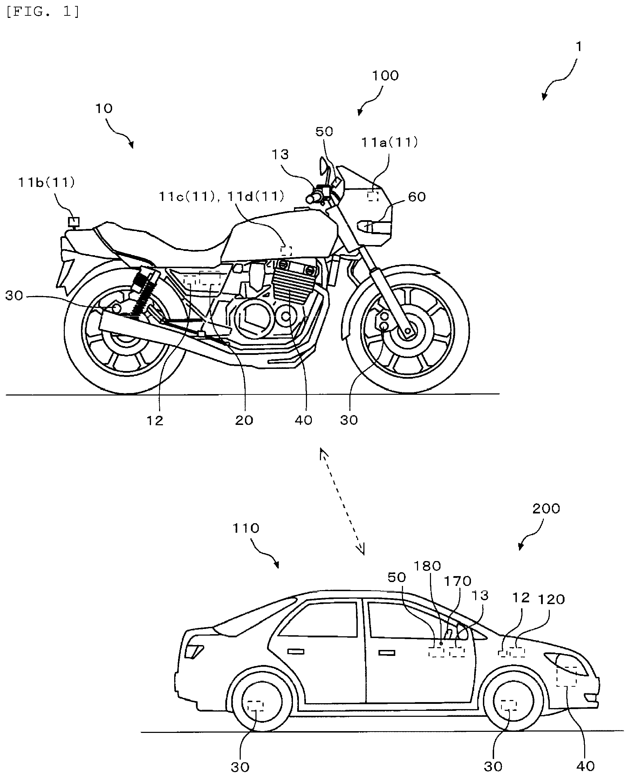

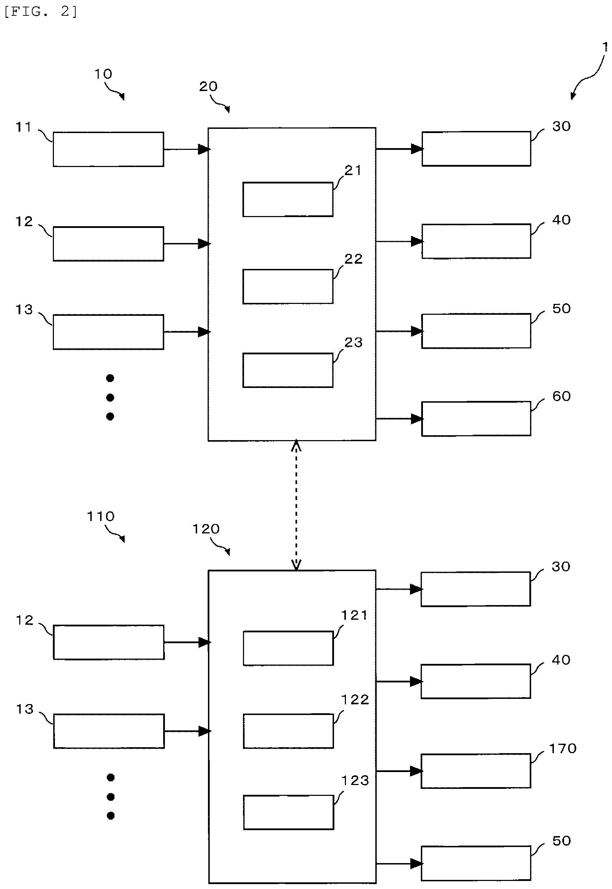

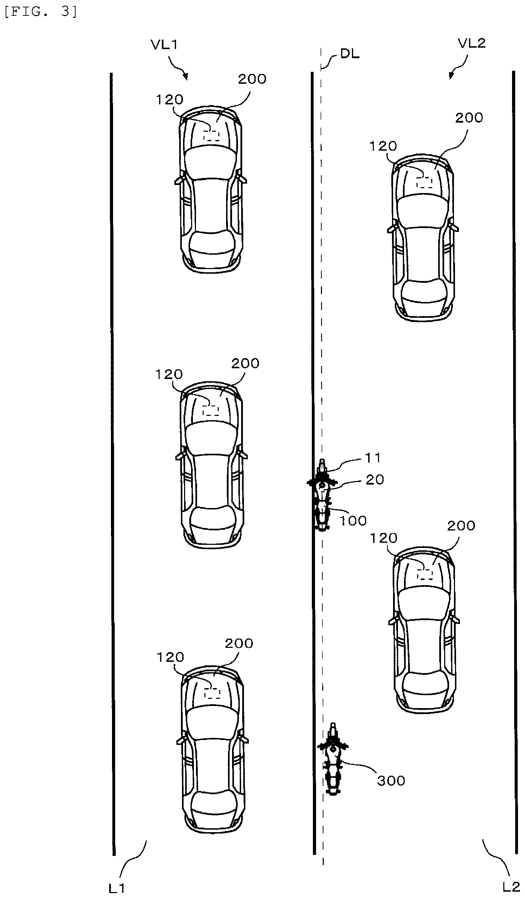

Fig. 1 and Fig. 2 are diagrams illustrating the configuration of the assistance system according to the embodiment of the invention. Fig. 3 is a diagram for illustrating an example of the function of the assistance system according to the embodiment of the invention.

As illustrated in Fig. 1 and Fig. 2, an assistance system 1 includes an own-vehicle driver assistance system 10 assisting a driver of a straddle-type vehicle 100 to which a surrounding environment detection device 11 is mounted, and an other-vehicle driver assistance system 110 assisting a driver of an other-vehicle 200. The other-vehicle 200 may be a vehicle other than a straddle-type vehicle (for example, a passenger car, a cargo truck, and the like), or may be a straddle-type vehicle.

The own-vehicle driver assistance system 10 includes a driving state detection device 12 for detecting driving state information on a vehicle (the straddle-type vehicle 100), a setting input device 13, and a control device (ECU) 20. The other-vehicle driver assistance system 110 includes a driving state detection device 12 for detecting driving state information on a vehicle (the other-vehicle 200), a setting input device 13, and a control device (ECU) 120. Detection results of various detection devices detecting other information may be input to the control device 20 and the control device 120.

The own-vehicle driver assistance system 10 executes an own-vehicle driver assistance operation of assisting the driver of the straddle-type vehicle 100 by using surrounding environment information on the straddle-type vehicle 100 that is acquired on the basis of the output of the surrounding environment detection device 11. Each unit of the own-vehicle driver assistance system 10 may be used exclusively for the own-vehicle driver assistance system 10, or may be shared with other systems. Note that, the own-vehicle driver assistance operation may be executed by using information different from the surrounding environment information on the straddle-type vehicle 100.

The surrounding environment detection device 11, for example, may be a surrounding environment detection device 11a directed forward of the straddle-type vehicle 100, may be a surrounding environment detection device 11b directed rearward of the straddle-type vehicle 100, may be a surrounding environment detection device 11c directed leftward of the straddle-type vehicle 100, may be a surrounding environment detection device 11d directed rightward of the straddle-type vehicle 100, or may be a combination thereof. Each of the surrounding environment detection devices 11a, 11b, 11c, and 11d, for example, is a radar, a Lidar sensor, an ultrasonic sensor, a camera, or the like. At least a part of the surrounding environment detection device 11c and the surrounding environment detection device 11d may be substituted by the surrounding environment detection device 11a or the surrounding environment detection device 11b.

The driving state detection device 12, for example, includes a front-wheel rotation rate sensor, a rear-wheel rotation rate sensor, and the like. The front-wheel rotation rate sensor and the rear-wheel rotation rate sensor detect a rotation rate of a wheel. The front-wheel rotation rate sensor and the rear-wheel rotation rate sensor may detect other physical amounts that can be substantially converted into the rotation rate of the wheel.

In addition, the driving state detection device 12, for example, includes an inertia measurement device. The inertia measurement device includes a triaxial gyroscope sensor and a three-way acceleration sensor, and measures triaxial acceleration and a triaxial angular rate of the straddle-type vehicle 100. The inertia measurement device may measure other physical amounts that can be substantially converted into the triaxial acceleration and the triaxial angular rate. In addition, the inertia measurement device may measure only a part of the triaxial acceleration and the triaxial angular rate.

In addition, the driving state detection device 12, for example, includes a braking force measurement device, a driving force measurement device, and the like. The braking force measurement device, for example, measures a manipulation amount of a brake manipulation of the driver, an actual braking force caused in a braking device 30, and the like. The braking force measurement device may measure other physical amounts that can be substantially converted into the manipulation amount of the brake manipulation of the driver or the actual braking force caused in the braking device 30. In addition, the driving force measurement device, for example, measures a manipulation amount of an accelerator manipulation of the driver, an actual driving force caused in a driving device 40, and the like. The driving force measurement device may measure other physical amounts that can be substantially converted into the manipulation amount of the accelerator manipulation of the driver or the actual driving force caused in the driving device 40.

The setting input device 13 receives the input of various settings by the driver. For example, the driver is capable of switching the validity and invalidity of various own-vehicle driver assistance operations by using the setting input device 13. In addition, for example, the driver is capable of setting various modes or various threshold values (for example, an upper limit value, a lower limit value, and the like) to be used in various own-vehicle driver assistance operations by using the setting input device 13. The setting input device 13 may receive the manipulation of the body of the driver (for example, hands, feet, and the like), or may receive the voice of the driver. In addition, the setting input device 13 may be provided to the straddle-type vehicle 100, or may be provided to an accessory of the straddle-type vehicle 100 (for example, a helmet, gloves, and the like) that is connected to the control device 20 such that communication can be performed.

In addition, the driving state detection device 12, for example, includes a receiving set of a signal from a global positioning system (GPS) satellite, and a storage unit of map information. Other configurations capable of measuring the position or a traveling direction of the straddle-type vehicle 100 may be adopted.

The control device 20 of the straddle-type vehicle 100 includes an acquisition section 21, an execution section 22, and a determination section 23. Each section of the control device 20 may be collectively provided to one housing, or may be dividedly provided to a plurality of housings. In addition, a part of the control device 20 or the entire control device 20, for example, may include a microcomputer, a microprocessor unit, or the like, may include updatable firmware or the like, or may be a program module or the like that is executed by a command from a CPU or the like.

The acquisition section 21 acquires information output from each device mounted to the straddle-type vehicle 100. For example, the acquisition section 21 acquires the surrounding environment information on the straddle-type vehicle 100, on the basis of the output from the surrounding environment detection device 11, and acquires the driving state information on the straddle-type vehicle 100, on the basis of the output from the driving state detection device 12 of the straddle-type vehicle 100. The surrounding environment information includes positional relationship information between the straddle-type vehicle 100 and a target positioned around the straddle-type vehicle 100 (for example, a vehicle, an obstacle, a road facility, a person, an animal, and the like). The positional relationship information, for example, is information such as a relative position, a relative distance, a relative speed, relative acceleration, relative jerk, a transit time difference, and a predicted time to crackup. The positional relationship information may be information on other physical amounts that can be substantially converted into the above information. The driving state information, for example, may be information such as the speed, an acceleration or a deceleration, a position, and a traveling direction of the straddle-type vehicle 100. The driving state information may be information on other physical amounts that can be substantially converted into the above information.

The execution section 22 outputs a control command to various devices of the own-vehicle driver assistance system 10, on the basis of various information pieces acquired by the acquisition section 21, and executes the own-vehicle driver assistance operation of assisting the driver of the straddle-type vehicle 100.

For example, when executing the own-vehicle driver assistance operation, the execution section 22 allows the straddle-type vehicle 100 to execute an automatic acceleration and deceleration operation, on the basis of the surrounding environment information on the straddle-type vehicle 100 (in particular, the positional relationship information) that is acquired by the acquisition section 21, as necessary. When executing the automatic acceleration and deceleration operation, the execution section 22 outputs the control command to the braking device 30 or the driving device 40. The braking device 30 brakes the straddle-type vehicle 100. The driving device 40 drives the straddle-type vehicle 100 as a power source of the straddle-type vehicle 100. The braking device 30 may be controlled to cause or increase deceleration, or may be controlled to cause or increase acceleration. The driving device 40 may be controlled to cause or increase acceleration, or may be controlled to cause or increase deceleration. The acceleration or the deceleration may be automatically controlled in a state where a brake manipulation and an accelerator manipulation are not performed at all, or the excess or deficiency of the manipulation may be automatically complemented in a state where at least one of the brake manipulation and the accelerator manipulation is performed.

For example, when executing the own-vehicle driver assistance operation, the execution section 22 allows a notification device 50 to execute a notification operation with respect to the driver, on the basis of the surrounding environment information on the straddle-type vehicle 100 (in particular, the positional relationship information) that is acquired by the acquisition section 21, as necessary. The notification device 50 may perform the notification with respect to the driver by a display (that is, perception in which a visual organ is used as a sensory organ), may perform the notification with respect to the driver by a sound (that is, perception in which an auditory organ is used as a sensory organ), or may perform the notification with respect to the driver by a vibration (that is, perception in which a tactile organ is used as a sensory organ). For example, the notification device 50 is a display, a lamp, a speaker, a vibrator, or the like. The notification device 50 may be provided to the straddle-type vehicle 100, or may be provided to the accessory of the straddle-type vehicle 100 (for example, a helmet, gloves, and the like) that is connected to the control device 20 such that communication can be performed. The notification device 50 may perform the notification with respect to the driver by causing momentary acceleration and deceleration in the straddle-type vehicle 100. That is, the notification device 50 may be attained by the braking device 30 or the driving device 40.

The determination section 23 determines the presence or absence of pass-through driving of the straddle-type vehicle 100 between lines of vehicles, on the basis of the surrounding environment information on the straddle-type vehicle 100 that is acquired by the acquisition section 21. As illustrated in Fig. 3, the pass-through driving between the lines of vehicles is driving in which the straddle-type vehicle 100 passes through between a left line VL1 of vehicles and a right line VL2 of vehicles at a speed higher than that of the other-vehicle 200 belonging to the left line VL1 of vehicles and the other-vehicle 200 belonging to the right line VL2 of vehicles. The left line VL1 of vehicles and the right line VL2 of vehicles are lines of vehicles formed by the other-vehicles 200 driving or stopping toward the same direction as a driving direction of the straddle-type vehicle 100.

Specifically, the determination section 23 acquires left relative speed information that is information indicating a relative speed of the other-vehicle 200 belonging to the left line VL1 of vehicles with respect to the straddle-type vehicle 100, on the basis of the positional relationship information between the straddle-type vehicle 100 and the target positioned around the straddle-type vehicle 100 that is acquired as the surrounding environment information on the straddle-type vehicle 100 by the acquisition section 21. The left line VL1 of vehicles is on the left of a driving line DL of the straddle-type vehicle 100, and is defined as a line of vehicles in a position in which a distance from the driving line DL is less than a reference value (that is, a line of vehicles positioned in a driving lane L1, in Fig. 3). The other-vehicle 200 that is an acquisition target of the relative speed may be a vehicle having the shortest relative distance with respect to the straddle-type vehicle 100. In addition, the left relative speed information may be information indicating an average relative speed of a plurality of other-vehicles 200 belonging to the left line VL1 of vehicles with respect to the straddle-type vehicle 100. Among the vehicles positioned on the left of the driving line DL of the straddle-type vehicle 100, a vehicle of which a relative distance with respect to the straddle-type vehicle 100 is less than the reference value may be selected as the acquisition target of the relative speed. In addition, in the left relative speed information, the other-vehicle 200 positioned on the left front side of the straddle-type vehicle 100 may be set as the acquisition target of the relative speed, or the other-vehicle 200 positioned on the left side or on the left rear side of the straddle-type vehicle 100 may be set as the acquisition target of the relative speed. The left relative speed information may be a speed difference of the straddle-type vehicle 100 in a direction parallel to the driving line DL, may be a differential value of an inter-vehicular distance, or may be other physical amounts that can be substantially converted into the above information.

In addition, the determination section 23 acquires left density information that is information indicating the density of the plurality of other-vehicles 200 belonging to the left line VL1 of vehicles, on the basis of the positional relationship information between the straddle-type vehicle 100 and the target positioned around the straddle-type vehicle 100 that is acquired as the surrounding environment information on the straddle-type vehicle 100 by the acquisition section 21. Among the other-vehicles 200 positioned on the left of the driving line DL of the straddle-type vehicle 100, the other-vehicle 200 of which a relative distance with respect to the straddle-type vehicle 100 is less than the reference value may be selected as an acquisition target of the density. In addition, in the left density information, the other-vehicle 200 positioned on the left front side of the straddle-type vehicle 100 may be set as the acquisition target of the density, or the other-vehicle 200 positioned on the left side or on the left rear side of the straddle-type vehicle 100 may be set as the acquisition target of the density. The left density information may be an inverse number of an inter-vehicular distance between two other-vehicles 200, may be an average value of the inverse numbers of the inter-vehicular distances between three or more other-vehicles 200, may be the number of other-vehicles 200 positioned in a predetermined region, may be an overtaking time interval of the straddle-type vehicle 100, or may be other physical amounts that can be substantially converted into the above information.

In addition, the determination section 23 acquires right relative speed information that is information indicating a relative speed of the other-vehicle 200 belonging to the right line VL2 of vehicles with respect to the straddle-type vehicle 100, on the basis of the positional relationship information between the straddle-type vehicle 100 and the target positioned around the straddle-type vehicle 100 that is acquired as the surrounding environment information on the straddle-type vehicle 100 by the acquisition section 21. The right line VL2 of vehicles is on the right of the driving line DL of the straddle-type vehicle 100, and is defined as a line of vehicles in a position in which a distance from the driving line DL is less than the reference value (that is, a line of vehicles positioned on a driving lane L2, in Fig. 3). The other-vehicle 200 that is an acquisition target of the relative speed may be a vehicle having the shortest relative distance with respect to the straddle-type vehicle 100. In addition, the right relative speed information may be information indicating an average relative speed of a plurality of other-vehicles 200 belonging to the right line VL2 of vehicles with respect to the straddle-type vehicle 100. Among the vehicles positioned on the right side of the driving line DL of the straddle-type vehicle 100, a vehicle of which a relative distance with respect to the straddle-type vehicle 100 is less than the reference value may be selected as the acquisition target of the relative speed. In addition, in the right relative speed information, the other-vehicle 200 positioned on the right front side of the straddle-type vehicle 100 may be set as the acquisition target of the relative speed, or the other-vehicle 200 positioned on the right side or on the right rear side of the straddle-type vehicle 100 may be set as the acquisition target of the relative speed. The right relative speed information may be a speed difference of the straddle-type vehicle 100 in a direction parallel to the driving line DL, may be a differential value of an inter-vehicular distance, or may be other physical amounts that can be substantially converted into the above information.

In addition, the determination section 23 acquires right density information that is information indicating the density of the plurality of other-vehicles 200 belonging to the right line VL2 of vehicles, on the basis of the positional relationship information between the straddle-type vehicle 100 and the target positioned around the straddle-type vehicle 100 that is acquired as the surrounding environment information on the straddle-type vehicle 100 by the acquisition section 21. Among the other-vehicles 200 positioned on the right of the driving line DL of the straddle-type vehicle 100, the other-vehicle 200 of which a relative distance with respect to the straddle-type vehicle 100 is less than the reference value may be selected as an acquisition target of the density. In addition, in the right density information, the other-vehicle 200 positioned on the right front side of the straddle-type vehicle 100 may be set as the acquisition target of the density, or the other-vehicle 200 positioned on the right side or on the right rear side of the straddle-type vehicle 100 may be set as the acquisition target of the density. The right density information may be an inverse number of an inter-vehicular distance between two other-vehicles 200, may be an average value of the inverse numbers of the inter-vehicular distances between three or more other-vehicles 200, may be the number of other-vehicles 200 positioned in a predetermined region, may be an overtaking time interval of the straddle-type vehicle 100, or may be other physical amounts that can be substantially converted into the above information.

In a case where the left relative speed information is information indicating a relative speed less than a reference, the left density information is information indicating a density greater than a reference, the right relative speed information is information indicating a relative speed less than the reference, and the right density information is information indicating a density greater than the reference, the determination section 23 determines that there is the pass-through driving of the straddle-type vehicle 100 between the lines of vehicles.

Note that, the determination section 23 may determine the presence or absence of the pass-through driving of the straddle-type vehicle 100 between the lines of vehicles by other methods. For example, in a case where it is assumed that the road on which the straddle-type vehicle 100 drives is a single driving lane, on the basis of the output of the surrounding environment detection device 11 and/or the driving state detection device 12 of the straddle-type vehicle 100, the determination section 23 determines that there is no pass-through driving of the straddle-type vehicle 100 between the lines of vehicles. In addition, the determination section 23 may assume the future driving state of the straddle-type vehicle 100, on the basis of the output of the surrounding environment detection device 11 and/or the driving state detection device 12 of the straddle-type vehicle 100, and on the basis of the result thereof, may determine the presence or absence of the pass-through driving of the straddle-type vehicle 100 between the lines of vehicles.

In a case where the determination section 23 determines that there is the pass-through driving of the straddle-type vehicle 100 between the lines of vehicles, in a state where the own-vehicle driver assistance operation of assisting the driver of the straddle-type vehicle 100 is valid, the execution section 22 changes the mode of the own-vehicle driver assistance operation to a special mode specialized to the pass-through driving between the lines of vehicles from a normal mode. For example, in the special mode, the execution section 22 enforcedly cancels or pauses a cruise control operation or an adaptive cruise control operation. In addition, in the special mode, the execution section 22 enforcedly decreases a desired speed in the cruise control operation or the adaptive cruise control operation by a predetermined amount or to a predetermined value. In addition, in the special mode, the execution section 22 enforcedly prohibits or weakens a caution according to a forward crackup suppression operation. In addition, in the special mode, the execution section 22 enforcedly prohibits or weakens a caution according to a dead zone driving vehicle caution operation. In addition, in the special mode, the execution section 22 enforcedly decreases acceleration caused in the straddle-type vehicle 100 by a predetermined amount or to a predetermined value. In addition, in the special mode, the execution section 22 starts the lighting or blinking of a headlight device 60. In addition, in the special mode, the execution section 22 changes the irradiation of the headlight device 60 to a high beam.

In a case where the determination section 23 determines that there is the pass-through driving of the straddle-type vehicle 100 between the lines of vehicles, the execution section 22 executes a communication operation of transmitting a trigger signal to the control device 120 of the other-vehicle driver assistance system 110 through wireless communication. The execution section 22 may transmit any signal as the trigger signal. For example, the trigger signal may be a determination result of the determination section 23, or may be a control command with respect to the other-vehicle driver assistance system 110. The trigger signal may be directly transmitted to the control device 120 of the other-vehicle driver assistance system 110, or may be indirectly transmitted through other communication media (for example, an internet server, a portable wireless terminal, and the like). The surrounding environment information and/or the driving state information on the straddle-type vehicle 100 that are acquired by the acquisition section 21 may be transmitted as the trigger signal or in addition to the trigger signal. On the other hand, in a case where the determination section 23 determines that there is no pass-through driving of the straddle-type vehicle 100 between the lines of vehicles, the execution section 22 does not execute the communication operation or executes the communication operation of transmitting another signal for informing that there is no pass-through driving.

The execution section 22 specifies the other-vehicle 200 positioned around the straddle-type vehicle 100, on the basis of the surrounding environment information on the straddle-type vehicle 100 that is acquired by the acquisition section 21, and the trigger signal is transmitted to the specified other-vehicle 200. In particular, the execution section 22 may specify the other-vehicle 200 belonging to any one of two lines of vehicles (that is, the left line VL1 of vehicles and the right line VL2 of vehicles) forming an interspace through which the straddle-type vehicle 100 passes, and the trigger signal may be transmitted to the specified other-vehicle 200. In addition, the execution section 22 may specify the other-vehicle 200 positioned in front of or on the side of the straddle-type vehicle 100, and the trigger signal may be transmitted to the specified other-vehicle 200. In addition, in a case where there is an other-straddle-type vehicle 300 that performs the pass-through driving between the lines of vehicles following the straddle-type vehicle 100, the execution section 22 may specify the other-vehicle 200 positioned in front of or on the side of the other-straddle-type vehicle 300, and the trigger signal may be transmitted to the specified other-vehicle 200. For example, the execution section 22 specifies the other-straddle-type vehicle 300 that is at the rear of the straddle-type vehicle 100 and drives a position in which a distance from the driving line DL of the straddle-type vehicle 100 is less than the reference value, on the basis of the positional relationship information between the straddle-type vehicle 100 and the target positioned around the straddle-type vehicle 100 that is acquired as the surrounding environment information on the straddle-type vehicle 100 by the acquisition section 21, and acquires rearward relative speed information that is information indicating a relative speed of the other-straddle-type vehicle 300 with respect to the straddle-type vehicle 100. In a case where the rearward relative speed information is information indicating a relative speed less than the reference value, the execution section 22 determines that the other-straddle-type vehicle 300 performs the pass-through driving between the lines of vehicles following the straddle-type vehicle 100. In addition, in a case where a group driving mode is valid in the straddle-type vehicle 100, and the straddle-type vehicle 100 does not drive at the tail end of the group, the execution section 22 determines that there is the other-straddle-type vehicle 300 performing the pass-through driving between the lines of vehicles following the straddle-type vehicle 100. The group driving mode is a mode in which the straddle-type vehicle 100 and the other-straddle-type vehicle 300 drive as a group, that is, in a body. In the group driving mode, the validity and the invalidity may be automatically switched by the execution section 22, on the basis of the surrounding environment information on the straddle-type vehicle 100 that is acquired by the acquisition section 21, or the validity and the invalidity may be switched by the setting input of a rider. For example, the execution section 22 determines whether the other-straddle-type vehicle 300 drives near the straddle-type vehicle 100 for longer than a reference time or a reference driving distance, on the basis of the surrounding environment information on the straddle-type vehicle 100 that is acquired by the acquisition section 21, and automatically validates the group driving mode in a case where the determination is affirmative.

The other-vehicle driver assistance system 110 executes the other-vehicle driver assistance operation of assisting the driver of the other-vehicle 200, in accordance with the trigger signal that is transmitted by the communication operation in the execution section 22 of the control device 20 of the own-vehicle driver assistance system 10. Each unit of the other-vehicle driver assistance system 110 may be used exclusively for the other-vehicle driver assistance system 110, or may be shared with other systems. Note that, the other-vehicle driver assistance system 110 may execute an assistance operation using other information that is detected by various detection devices of the other-vehicle 200, in addition to the other-vehicle driver assistance operation described below. For example, the other-vehicle driver assistance system 110 may include the same surrounding environment detection device 11 as the surrounding environment detection device 11 of the own-vehicle driver assistance system 10, and the control device 120 may execute the assistance operation based on the surrounding environment information on the other-vehicle 200.

In the driving state detection device 12, the setting input device 13, the braking device 30, the driving device 40, and the notification device 50 of the other-vehicle driver assistance system 110, the same description as that of the driving state detection device 12, the setting input device 13, the braking device 30, the driving device 40, and the notification device 50 of the own-vehicle driver assistance system 10 will be omitted.

The control device 120 of the other-vehicle 200 includes an acquisition section 121, an execution section 122, and a determination section 123. Each section of the control device 120 may be collectively provided to one housing, or may be dividedly provided to a plurality of housings. In addition, a part of the control device 120 or the entire control device 120, for example, may include a microcomputer, a microprocessor unit, or the like, may include updatable firmware or the like, or may be a program module or the like that is executed by a command from a CPU or the like.

The acquisition section 121 acquires information output from each device mounted to the other-vehicle 200. For example, the acquisition section 121 acquires the driving state information on the other-vehicle 200, on the basis of the output from the driving state detection device 12 of the other-vehicle 200.

The execution section 122 outputs a control command to various devices of the other-vehicle driver assistance system 110, on the basis of various information pieces that are acquired by the acquisition section 121, and executes the other-vehicle driver assistance operation of assisting the driver of the other-vehicle 200. That is, in a case where the trigger signal that is transmitted by the communication operation in the execution section 22 of the control device 20 of the own-vehicle driver assistance system 10 is received, the execution section 122 executes the other-vehicle driver assistance operation. That is, the trigger signal that is transmitted from the control device 20 is a signal to be a trigger for the start or the change of the other-vehicle driver assistance operation.

For example, when executing the other-vehicle driver assistance operation, the execution section 122 allows the notification device 50 to execute the notification operation with respect to the driver, as necessary. In the notification operation, which side (the right side or the left side) of the other-vehicle 200 the straddle-type vehicle 100 passes through may be notified to the driver. In addition, at which speed or relative speed the straddle-type vehicle 100 passes through the side of the other-vehicle 200 may be notified to the driver. The notification device 50 may be provided to the other-vehicle 200, may be provided to an accessory of the other-vehicle 200 (for example, a helmet, gloves, and the like) that can be connected to the control device 120 such that communication can be performed, or may be provided to a road facility (for example, a signboard, a post, and the like that are attached to the road). The execution section 122 may unconditionally execute the notification operation, in accordance with the trigger signal, or may acquire a crackup possibility index that is the index of a crackup possibility between the straddle-type vehicle 100 and the other-vehicle 200 after receiving the trigger signal, and may execute the notification operation in a case where the crackup possibility index is an index indicating that there is a crackup possibility greater than a reference. The execution section 122 may acquire the crackup possibility index, on the basis of the positional relationship information between the straddle-type vehicle 100 and the other-vehicle 200 that is transmitted from the control device 20, and for example, may execute the notification operation in a case where the crackup possibility index is an index indicating that a required time until the straddle-type vehicle 100 reaches the other-vehicle 200 or reaches the side of the other-vehicle 200 is shorter than a reference value. The execution section 122 may acquire the crackup possibility index, on the basis of manipulation state information on a steering device 170 of the driver in the other-vehicle 200, and for example, may execute the notification operation in a case where the crackup possibility index is an index indicating that the direction of the steering that is performed by the steering device 170 is a direction approaching the driving line DL of the straddle-type vehicle 100. The execution section 122 may acquire the crackup possibility index, on the basis of manipulation state information on a direction indicator 180 of the driver in the other-vehicle 200, and for example, may execute the notification operation in a case where the crackup possibility index is an index indicating that the direction of a direction indication of the driver that is performed by the direction indicator 180 is a direction approaching the driving line DL of the straddle-type vehicle 100. The determination using the crackup possibility index may be executed by the execution section 22 of the control device 20, and only when the crackup possibility index is the index indicating that there is the crackup possibility greater than the reference, the trigger signal may be transmitted to the control device 120 of the other-vehicle 200. That is, the presence or absence of the execution of the other-vehicle driver assistance operation that is executed by the control device 120 of the other-vehicle 200 or the other-vehicle driver assistance operation thereof is changed in accordance with the crackup possibility index that is the index of the crackup possibility between the straddle-type vehicle 100 and the other-vehicle 200.

For example, when executing the other-vehicle driver assistance operation, the execution section 122 executes a driving control operation of controlling the driving of the other-vehicle 200, as necessary. For example, as the driving control operation, the execution section 122 outputs a control command to the braking device 30 or the driving device 40, and allows the other-vehicle 200 to execute an automatic acceleration and deceleration operation. In addition, for example, as the driving control operation, the execution section 122 outputs a control command to the steering device 170, and allows the other-vehicle 200 to execute an automatic steering operation. The execution section 122 may unconditionally execute the driving control operation, in accordance with the trigger signal, or may acquire the crackup possibility index that is the index of the crackup possibility between the straddle-type vehicle 100 and the other-vehicle 200 after receiving the trigger signal, and may execute the driving control operation in a case where the crackup possibility index is the index indicating that there is the crackup possibility greater than the reference. The execution section 122 may acquire the crackup possibility index, on the basis of the positional relationship information between the straddle-type vehicle 100 and the other-vehicle 200 that is transmitted from the control device 20, and for example, may execute the driving control operation of preventing the other-vehicle 200 from approaching the driving line DL of the straddle-type vehicle 100 in a case where the crackup possibility index is the index indicating that the required time until the straddle-type vehicle 100 reaches the other-vehicle 200 or reaches the side of the other-vehicle 200 is shorter than the reference value. The execution section 122 may acquire the crackup possibility index, on the basis of the manipulation state information on the steering device 170 of the driver in the other-vehicle 200, and for example, may execute the driving control operation of preventing the other-vehicle 200 from approaching the driving line DL of the straddle-type vehicle 100 in a case where the crackup possibility index is the index indicating that the direction of the steering that is performed by the steering device 170 is the direction approaching the driving line DL of the straddle-type vehicle 100. The execution section 122 may acquire crackup possibility index, on the basis of the manipulation state information on the direction indicator 180 of the driver in the other-vehicle 200, and for example, may execute the driving control operation of preventing the other-vehicle 200 from approaching the driving line DL of the straddle-type vehicle 100 in a case where the crackup possibility index is the index indicating that the direction of the direction indication of the driver that is performed by the direction indicator 180 is the direction approaching the driving line DL of the straddle-type vehicle 100. The determination using the crackup possibility index may be executed by the execution section 22 of the control device 20, and the trigger signal may be transmitted to the control device 120 of the other-vehicle 200 only in a case where the crackup possibility index is the index indicating that there is the crackup possibility greater than the reference. That is, the presence or absence of the execution of the other-vehicle driver assistance operation that is executed by the control device 120 of the other-vehicle 200 or the other-vehicle driver assistance operation thereof is changed in accordance with the crackup possibility index that is the index of the crackup possibility between the straddle-type vehicle 100 and the other-vehicle 200.

The determination section 123 determines whether the other-vehicle driver assistance operation according to the trigger signal transmitted from the control device 20 is executed in the execution section 122. In a case where the determination section 123 determines that the other-vehicle driver assistance operation is executed, the execution section 122 executes a communication operation of transmitting another trigger signal to the control device 20 of the own-vehicle driver assistance system 10 through wireless communication. The execution section 122 may transmit any signal as the trigger signal. For example, the trigger signal may be a determination result of the determination section 123, or may be a control command with respect to the own-vehicle driver assistance system 10. The trigger signal may be directly transmitted to the control device 20 of the own-vehicle driver assistance system 10, or may be indirectly transmitted through other communication media (for example, an internet server, a portable wireless terminal, and the like). The driving state information on the other-vehicle 200 that is acquired by the acquisition section 121 may be transmitted as the trigger signal or in addition to the trigger signal. On the other hand, in a case where the determination section 123 determines that the other-vehicle driver assistance operation is not executed, the execution section 122 does not execute the communication operation or executes the communication operation of transmitting another signal for informing that the other-vehicle driver assistance operation is not executed.

In a case where the trigger signal that is transmitted by the communication operation in the execution section 122 of the control device 120 of the other-vehicle driver assistance system 110 is received, the execution section 22 changes the presence or absence of the execution of the own-vehicle driver assistance operation of assisting the driver of the straddle-type vehicle 100 or the own-vehicle driver assistance operation thereof. For example, in a case where the trigger signal is received from all the other-vehicles 200 positioned in front of or on the side of the straddle-type vehicle 100, of which a relative distance with respect to the straddle-type vehicle 100 is less than the reference value, the execution section 22 changes the mode of the own-vehicle driver assistance operation to the normal mode from the special mode specialized to the pass-through driving between the lines of vehicles. That is, the presence or absence the execution of the own-vehicle driver assistance operation that is executed by the control device 20 of the straddle-type vehicle 100 or the own-vehicle driver assistance operation thereof is changed in accordance with the presence or absence of the execution of the other-vehicle driver assistance operation by the control device 120 of the other-vehicle 200. That is, the trigger signal that is transmitted from the control device 120 is a signal to be a trigger for the start or the change of the own-vehicle driver assistance operation.

### <Operation of Assistance System>

The operation of the assistance system according to the embodiment will be described.

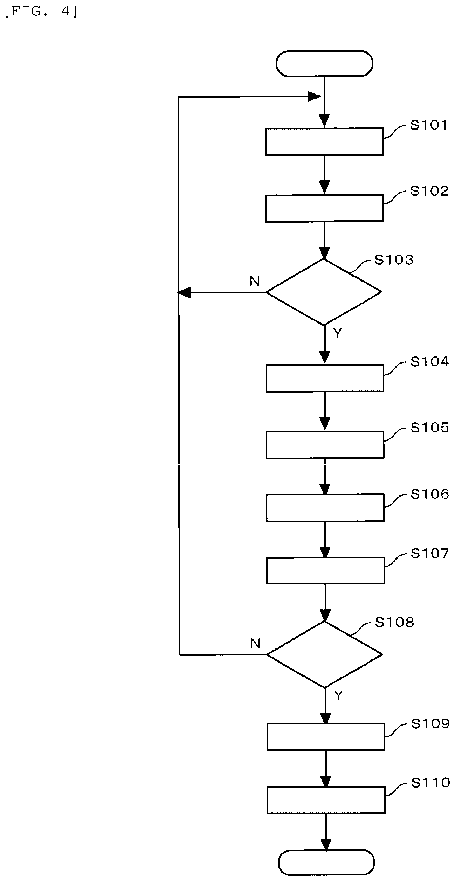

Fig. 4 is a diagram for illustrating an example of the operation of the assistance system according to the embodiment of the invention. Note that, the order of each step may be suitably switched, some steps may be suitably omitted, or another step may be suitably added.

The assistance system 1 repeatedly executes the operation illustrated in Fig. 4 while the straddle-type vehicle 100 is driving and the other-vehicle 200 is driving or stopping.

### (Acquisition Step)

In step S101, the acquisition section 21 of the control device 20 of the own-vehicle driver assistance system 10 acquires the information that is output from each device mounted to the straddle-type vehicle 100. For example, the acquisition section 21 acquires the surrounding environment information on the straddle-type vehicle 100, on the basis of the output from the surrounding environment detection device 11, and acquires the driving state information on the straddle-type vehicle 100, on the basis of the output of the driving state detection device 12 from the straddle-type vehicle 100.

### (Execution Step)

Subsequently, in step S102, the execution section 22 of the control device 20 of the own-vehicle driver assistance system 10 outputs the signal to various devices of the own-vehicle driver assistance system 10, on the basis of various information pieces that are acquired in step S101, and executes the own-vehicle driver assistance operation of assisting the driver of the straddle-type vehicle 100.

### (Determination Step)

Subsequently, in step S103, the determination section 23 of the control device 20 of the own-vehicle driver assistance system 10 determines the presence or absence of the pass-through driving of the straddle-type vehicle 100 between the lines of vehicles, on the basis of the surrounding environment information on the straddle-type vehicle 100 that is acquired by the acquisition section 21. In a case where it is determined that there is the pass-through driving of the straddle-type vehicle 100 between the lines of vehicles, the process proceeds to step S104, and in a case where it is determined that there is no pass-through driving of the straddle-type vehicle 100 between the lines of vehicles, the process returns to step S101.

### (Execution Step)

Subsequently, in step S104, the execution section 22 of the control device 20 of the own-vehicle driver assistance system 10 changes the mode of the own-vehicle driver assistance operation to the special mode specialized to the pass-through driving between the lines of vehicles from the normal mode, in a state where the own-vehicle driver assistance operation of assisting the driver of the straddle-type vehicle 100 is valid.

### (Execution Step)

Subsequently, in step S105, the execution section 22 of the control device 20 of the own-vehicle driver assistance system 10 executes the communication operation of transmitting the trigger signal to the control device 120 of the other-vehicle driver assistance system 110 through wireless communication.

### (Acquisition Step)

Subsequently, in step S106, the acquisition section 121 of the control device 120 of the other-vehicle driver assistance system 110 acquires the information that is output from each device mounted to the other-vehicle 200. For example, the acquisition section 121 acquires the driving state information on the other-vehicle 200, on the basis of the output from the driving state detection device 12 of the other-vehicle 200.

### (Execution Step)

Subsequently, in step S107, the execution section 122 of the control device 120 of the other-vehicle driver assistance system 110 outputs the signal to various devices of the other-vehicle driver assistance system 110, on the basis of various information pieces that are acquired in step S106, and executes the other-vehicle driver assistance operation of assisting the driver of the other-vehicle 200.

### (Determination Step)

Subsequently, in step S108, the determination section 123 of the control device 120 of the other-vehicle driver assistance system 110 determines whether the other-vehicle driver assistance operation is executed in step S107. In a case where it is determined that the other-vehicle driver assistance operation is executed, the process proceeds to step S109, and in a case where it is determined that the other-vehicle driver assistance operation is not executed, the process returns to step S101.

### (Execution Step)

Subsequently, in step S109, the execution section 122 of the control device 120 of the other-vehicle driver assistance system 110 executes the communication operation of transmitting the trigger signal to the control device 20 of the own-vehicle driver assistance system 10 through wireless communication.

### (Execution Step)

Subsequently, in step S110, the execution section 22 of the control device 20 of the own-vehicle driver assistance system 10 changes the mode of the own-vehicle driver assistance operation to the normal mode from the special mode specialized to the pass-through driving between the lines of vehicles, in a state where the own-vehicle driver assistance operation of assisting the driver of the straddle-type vehicle 100 is valid.

### <Effect of Assistance System>

The effect of the assistance system according to the embodiment will be described.

In the assistance system 1, the surrounding environment information on the straddle-type vehicle 100 is acquired on the basis of the output of at least one surrounding environment detection device 11, the presence or absence of the pass-through driving of the straddle-type vehicle 100 between the lines of vehicles is determined on the basis of the surrounding environment information, in a case where it is determined that there is the pass-through driving between the lines of vehicles, the trigger signal is transmitted to the other-control device 120 from the control device 20 of the straddle-type vehicle 100 through the wireless communication, and in a case where the other-control device 120 receives the trigger signal, the other-vehicle driver assistance operation of assisting the driver of the other-vehicle 200 positioned around the straddle-type vehicle 100 is executed. Accordingly, it is possible to suitably respond to driving particularity of the straddle-type vehicle 100.

Preferably, the other-control device 120 executes the notification operation with respect to the driver of the other-vehicle 200, as the other-vehicle driver assistance operation. In addition, the other-control device 120 executes the driving control operation of controlling the driving of the other-vehicle 200, as the other-vehicle driver assistance operation. According to the configuration as described above, the assistance for the driver driving the other-vehicle 200 is optimized.

Preferably, the other-control device 120 changes the presence or absence of the execution of the other-vehicle driver assistance operation or the other-vehicle driver assistance operation thereof, in accordance with the crackup possibility index that is the index of the crackup possibility between the straddle-type vehicle 100 and the other-vehicle 200. According to the configuration as described above, the assistance for the driver driving the other-vehicle 200 is optimized.

Preferably, the execution section 22 of the control device 20 changes the presence or absence of the execution of the own-vehicle driver assistance operation of assisting the driver of the straddle-type vehicle 100 or the own-vehicle driver assistance operation thereof, in accordance with the presence or absence of the execution of the other-vehicle driver assistance operation by the other-control device 120. According to the configuration as described above, the assistance for the driver driving the straddle-type vehicle 100 is optimized.

The embodiment of the invention is not limited to the above description. That is, in the invention, the embodiment described above is modified. In addition, in the invention, only a part of the embodiment described above is implemented.

For example, in the above description, a case has been described in which the execution section 22 of the control device 20 executes the own-vehicle driver assistance operation of assisting the driver of the straddle-type vehicle 100, but the execution section 22 of the control device 20 may not execute the own-vehicle driver assistance operation.

For example, in the above description, a case has been described in which the determination section 23 of the control device 20 determines the presence or absence of the pass-through driving of the straddle-type vehicle 100 between the lines of vehicles, on the basis of the information that is acquired by the acquisition section 21 of the control device 20 only, but the determination section 23 of the control device 20 may determine the presence or absence of the pass-through driving of the straddle-type vehicle 100 between the lines of vehicles by adding the information that is acquired by the acquisition section 121 of the other-control device 120.

For example, in the above description, a case has been described in which the other-control device 120 is provided to the other-vehicle 200, but the other-control device 120 may be provided to the accessory of the other-vehicle 200 (for example, a helmet, gloves, and the like), may be provided to the road facility (for example, a signboard, a post, and the like that are attached to the road), or may be provided to other communication media (for example, an internet server, a portable wireless terminal, and the like). Reference Signs List

1: Assistance system
10: Own-vehicle driver assistance system
11: Surrounding environment detection device
12: Driving state detection device
13: Setting input device
20, 120: Control device
21, 121: Acquisition section
22, 122: Execution section
23, 123: Determination section
30: Braking device
40: Driving device
50: Notification device
60: Headlight device
100, 300: Straddle-type vehicle
110: Other-vehicle driver assistance system
170: Steering device
180: Direction indicator
200: Other-vehicle

## Claims

1. An assistance system (1) including a control device (20) of a straddle-type vehicle (100) to which at least one surrounding environment detection device (11) is mounted,
wherein the control device (20) includes:
a determination section (23) determining presence or absence of pass-through driving of the straddle-type vehicle (100) between lines of vehicles, on the basis of output of the surrounding environment detection device (11); and
an execution section (22) executing a communication operation of transmitting a trigger signal to an other-control device (120) through wireless communication when the determination section (23) determines that there is the pass-through driving between the lines of vehicles, and
when the trigger signal is received, the other-control device (120) executes an other-vehicle driver assistance operation of assisting a driver of an other-vehicle (200) positioned around the straddle-type vehicle (100).

2. The assistance system (1) according to claim 1,
wherein the other-control device (120) executes a notification operation with respect to the driver of the other-vehicle (200) as the other-vehicle driver assistance operation.

3. The assistance system (1) according to claim 2,
wherein the other-control device (120) executes the notification operation by outputting a control command to a notification device (50) mounted to the other-vehicle (200).

4. The assistance system (1) according to claim 2 or 3,
wherein the other-control device (120) executes the notification operation by outputting a control command to a notification device (50) provided to an accessory of the other-vehicle (200) that is connected to the other-control device (120) such that communication can be performed.

5. The assistance system (1) according to any one of claims 2 to 4,
wherein the other-control device (120) executes the notification operation by outputting a control command to a notification device (50) provided to a road facility.

6. The assistance system (1) according to any one of claims 1 to 5,
wherein the other-control device (120) executes a driving control operation of controlling driving of the other-vehicle (200) as the other-vehicle driver assistance operation.

7. The assistance system (1) according to any one of claims 1 to 6,
wherein the other-vehicle driver assistance operation is an operation of assisting the driver of the other-vehicle (200) specified as a vehicle belonging to any one of two lines (VL1 and VL2) of vehicles forming an interspace through which the straddle-type vehicle (100) passes.

8. The assistance system (1) according to any one of claims 1 to 7,
wherein the other-vehicle driver assistance operation is an operation of assisting the driver of the other-vehicle (200) specified as a vehicle positioned in front of or on a side of the straddle-type vehicle (100).

9. The assistance system (1) according to any one of claims 1 to 8,
wherein the other-vehicle driver assistance operation is an operation of assisting the driver of the other-vehicle (200) specified as a vehicle positioned in front of or on a side of an other-straddle-type vehicle (300) that performs the pass-through driving between the lines of vehicles following the straddle-type vehicle (100).

10. The assistance system (1) according to any one of claims 1 to 9,
wherein the other-control device (120) changes presence or absence of execution of the other-vehicle driver assistance operation or the other-vehicle driver assistance operation, in accordance with a crackup possibility index that is an index of a crackup possibility between the straddle-type vehicle (100) and the other-vehicle (200).

11. The assistance system (1) according to claim 10,
wherein the crackup possibility index is acquired on the basis of positional relationship information between the straddle-type vehicle (100) and the other-vehicle (200).

12. The assistance system (1) according to claim 10 or 11,
wherein the crackup possibility index is acquired on the basis of manipulation state information on a steering device (170) of the driver in the other-vehicle (200).

13. The assistance system (1) according to any one of claims 10 to 12,
wherein the crackup possibility index is acquired on the basis of manipulation state information on a direction indicator (180) of the driver in the other-vehicle (200).

14. The assistance system (1) according to any one of claims 1 to 13,
wherein the execution section (22) changes presence or absence of execution of an own-vehicle driver assistance operation of assisting a driver of the straddle-type vehicle (100) or the own-vehicle driver assistance operation, in accordance with presence or absence of execution of the other-vehicle driver assistance operation by the other-control device (120).

15. A control method of an assistance system (1) including a control device (20) of a straddle-type vehicle (100) to which at least one surrounding environment detection device (11) is mounted,
wherein a determination section (23) of the control device (20) determines presence or absence of pass-through driving of the straddle-type vehicle (100) between lines of vehicles, on the basis of output of the surrounding environment detection device (11),
when the determination section (23) determines that there is the pass-through driving between the lines of vehicles, an execution section (22) of the control device (20) executes a communication operation of transmitting a trigger signal to an other-control device (120) through wireless communication, and
when the trigger signal is received, the other-control device (120) executes an other-vehicle driver assistance operation of assisting a driver of an other-vehicle (200) positioned around the straddle-type vehicle (100).
